# EUROPEAN PATENT APPLICATION

(11) **EP 4 575 258 A1**
(43) Date of publication of application: **25.06.2025**
(21) Application number: 24835807.9
(22) Date of filing: 24.05.2024
(51) Int. Cl.: F16D 43/20, F16D 43/02

(54) **BIDIRECTIONAL TORQUE LIMITER**

(30) Priority: 05.07.2023 JP 2023110615
(71) Applicant: Origin Company, Limited, Saitama-shi Saitama 338-0823 (JP)
(72) Inventor: MATSUOKA, Takahiro, Saitama-shi, Saitama 338-0823 (JP); HIRATA, Masayuki, Saitama-shi, Saitama 338-0823 (JP)
(74) Representative: Müller-Boré & Partner Patentanwälte PartG mbB
(86) International application number: PCT/JP2024/019199
(87) International publication number: WO 2025/009286

(57) **Abstract**

A new bidirectional torque limiter that has a smaller number of components and is easy to assemble, in particular a bidirectional torque limiter that enables the magnitude of rotation torque at which rotation starts when a rotation torque is applied from one of two connected members to differ from the magnitude of rotation torque at which rotation starts when a rotation torque is applied from the other member. An internal coil spring (76) and an external coil spring (82) are mounted on the inner peripheral surface and the outer peripheral surface, respectively, of a common ring member (10).

## Description

### Technical Field

The present invention relates to a bidirectional torque limiter, and in particular to a bidirectional torque limiter that enables the magnitude of rotation torque at which rotation starts when a rotation torque is applied from one of two connected members to differ from the magnitude of rotation torque at which rotation starts when a rotation torque is applied from the other member.

### Background Art

One example of the bidirectional torque limiter described above is a bidirectional torque limiter disclosed in PTL 1 by the applicant of the present application (hereinafter, this bidirectional torque limiter may be referred to as a "prior bidirectional torque limiter"). The prior bidirectional torque limiter includes a fixation housing and a one-side member, an other-side member, an outer race, and an inner race, which have a common central axis in the housing. A one-side locking portion extending in the axial direction is formed at the one-side member, an other-side locking portion extending in the axial direction is formed at the other-side member, and the one-side locking portion and the other-side locking portion are combined and arranged such that two gaps are present in the circumferential direction. An external coil spring is mounted on the outer peripheral surface of the outer race. The inner diameter of the external coil spring in a free state is less than the outer diameter of the outer race, and the external coil spring is held in close contact with the outer race with a relatively small force. When the torque generated by the external coil spring held in close contact with the outer race is referred to as external holding torque, this external holding torque is relatively small. The external coil spring has two external hook portions at different angular positions in the circumferential direction, and each of the two external hook portions is inserted in a corresponding one of the two gaps described above. An internal coil spring is mounted on the outer peripheral surface of the inner race. The inner diameter of the internal coil spring in a free state is less than the outer diameter of the inner race, and the internal coil spring is held in close contact with the inner race with a relatively large force. When the torque generated by the internal coil spring held in close contact with the inner race is referred to as internal holding torque, this internal holding torque is relatively large. The internal coil spring has two internal hook portions at different angular positions in the circumferential direction, and each of the two internal hook portions is inserted into a hook groove formed in the inner peripheral surface of the outer race.

When a rotation torque is applied to the one-side member, the one-side locking portion pushes one of the two external hook portions in a direction that increases the diameter of the external coil spring. Since the external coil spring is mounted on the outer peripheral surface of the outer race, the outer race begins rotating together with the external coil spring and pushes one of the two internal hook portions of the internal coil spring in the direction that increases the diameter of the internal coil spring. At this time, since the external holding torque is less than the internal holding torque, when the rotation torque applied to the one-side member is greater than the external holding torque, the external coil spring slides relative to the outer race before the internal coil spring slides relative to the inner race. In other words, before the internal coil spring starts to rotate relative to the inner race, that is, with the outer race held by the internal coil spring, the external coil spring starts to rotate relative to the outer race. Then, after the external hook portion pushed by the one-side locking portion comes into contact with the other-side locking portion, the one-side locking portion pushes the other-side locking portion through the external hook portion, and the one-side member, the external coil spring, and the other-side member rotate integrally. In other words, the rotation applied to the one-side member is transmitted to the other-side member. When the rotation torque applied to the one-side member is less than the external holding torque, the one-side member does not rotate and is held by the external holding torque.

In contrast, when a rotation torque is applied to the other-side member, the other-side locking portion pushes one of the two external hook portions in a direction that reduces the diameter of the external coil spring. This augments the close contact between the external coil spring and the outer race, causing the outer race to begin rotating integrally with the external coil spring. Since the external coil spring is mounted on the outer peripheral surface of the outer race, the outer race begins rotating together with the external coil spring and pushes one of the two internal hook portions of the internal coil spring in the direction that increases the diameter of the internal coil spring. Thus, when the rotation torque applied to the other-side member is greater than the internal holding torque, the internal coil spring slides relative to the inner race. In other words, the internal coil spring starts to rotate relative to the inner race, and the other-side member, the external coil spring, the outer race, and the internal coil spring rotate integrally relative to the inner race. Then, after the external hook portion pushed by the other-side locking portion comes into contact with the one-side locking portion, the other-side locking portion pushes the one-side locking portion through the external hook portion, and the other-side member, the external coil spring, and the one-side member (as well as the outer race and the internal coil spring) rotate integrally. That is, the rotation applied to the other-side member is transmitted to the one-side member. When the rotation torque applied to the other-side member is less than the internal holding torque, the other-side member does not rotate and is held by the internal holding torque.

In other words, in the prior bidirectional torque limiter, the magnitude of rotation torque at which sliding starts, that is, at which rotation starts, differs between the case where a rotation torque is transmitted from the one-side member to the other-side member and the case where a rotation torque is transmitted from the other-side member to the one-side member, and the magnitude is set to be smaller for the former than for the latter.

### Prior Art Document

### Patent Literature

PTL 1: Japanese Patent No. 6967687

### Summary of Invention

### Technical Problem

As such, the bidirectional torque limiter disclosed in PTL 1 described above has a large number of components, and there is room for improvement in terms of the assembly process, weight, and cost. Also, alignment is needed when inserting the internal hook portions of the internal coil spring mounted on the outer peripheral surface of the inner race into the hook groove formed in the inner peripheral surface of the outer race, thereby complicating the assembly process.

The present invention has been made in consideration of the above-mentioned circumstances, and its main technical object is to provide, by reviewing the prior bidirectional torque limiter, a new bidirectional torque limiter that has a smaller number of components than the prior bidirectional torque limiter and is easy to assemble.

### Solution to Problem

According to the present invention, as a bidirectional torque limiter that solves the above-mentioned main technical object, a bidirectional torque limiter is provided that includes a fixation housing and a one-side member, an other-side member, and a cylindrical ring member that have a common central axis in the housing, in which
a one-side locking portion extending in an axial direction is formed at the one-side member, an other-side locking portion extending in the axial direction is formed at the other-side member, and the one-side locking portion and the other-side locking portion are combined and arranged such that two gaps are present in a circumferential direction,
an internal coil spring is mounted on an inner peripheral surface of the ring member, an outer diameter of the internal coil spring in a free state is greater than an inner diameter of the ring member, the internal coil spring held in close contact with the ring member with a relatively small force, the internal coil spring includes two internal hook portions at different angular positions in a circumferential direction, and each of the two internal hook portions is inserted in a corresponding one of the two gaps,
an external coil spring is mounted on an outer peripheral surface of the ring member, an inner diameter of the external coil spring in a free state is less than an outer diameter of the ring member, the external coil spring is held in close contact with the ring member with a relatively large force, the external coil spring includes two external hook portions at different angular positions in the circumferential direction, and each of the two external hook portions is inserted in a recessed portion formed in an inner peripheral surface of the housing,
when a rotation torque is applied to the one-side member, one of the two internal hook portions is pushed by the one-side locking portion in a direction that increases a diameter of the internal coil spring, and one of the two external hook portions is pushed by the housing in the recessed portion in a direction that increases a diameter of the external coil spring, so that the one-side member rotates integrally with the internal coil spring and the ring member overcoming a relatively large braking torque applied by the external coil spring and transmits rotation to the other-side member, and
when a rotation torque is applied to the other-side member, one of the two internal hook portions is pushed by the other-side locking portion in a direction that reduces the diameter of the internal coil spring, and one of the two external hook portions is pushed by the housing in the recessed portion in a direction that increases the diameter of the external coil spring, so that, with the ring member held by the external coil spring, the other-side member rotates together with the internal coil spring relative to the ring member and overcoming a relatively small braking torque applied by the internal coil spring and transmits rotation to the one-side member.

Preferably, cross sections of the one-side locking portion and the other-side locking portion both have a shape of an arc extending around the central axis. In this case, preferably, a cutout is formed at a circumferential end portion of both axial end portions of the one-side locking portion, and a circumferential end surface of the one-side locking portion is partitioned into a cutout end surface in which the cutout is formed and a non-cutout end surface in which the cutout is not formed, and when the one-side member rotates, the cutout end surface pushes one of the two internal hook portions, and the non-cutout end surface pushes a circumferential end surface of the other-side locking portion, so that one of the two internal hook portions pushed by the cutout end surface is separated from the circumferential end surface of the other-side locking portion, whereas when the other-side member rotates, a circumferential end surface of the other-side locking portion pushes the non-cutout end surface of the one-side member together with one of the two internal hook portions, so that one of the two internal hook portions pushed by the other-side locking portion is separated from the cutout end surface of the one-side locking portion. Preferably, the housing includes annular grooves in which both axial end portions of the ring member are loosely fitted. Preferably, the one-side member, the other-side member, the ring member, the internal coil spring, and the external coil spring are made of metal, and the housing is made of synthetic resin.

The above-mentioned main technical object can also be solved by a bidirectional torque limiter that includes a fixation member and a one-side member, an other-side member, and a cylindrical ring member that have a common central axis, in which
a one-side locking portion extending in an axial direction is formed at the one-side member, an other-side locking portion extending in the axial direction is formed at the other-side member, and the one-side locking portion and the other-side locking portion are combined and arranged such that two gaps are present in a circumferential direction,
an external coil spring is mounted on an outer peripheral surface of the ring member, an inner diameter of the external coil spring in a free state is less than an outer diameter of the ring member, the external coil spring is held in close contact with the ring member with a relatively small force, the external coil spring includes two external hook portions at different angular positions in a circumferential direction, and each of the two external hook portions is inserted in a corresponding one of the two gaps,
an internal coil spring is mounted on an inner peripheral surface of the ring member, an outer diameter of the internal coil spring in a free state is greater than an inner diameter of the ring member, the internal coil spring is brought into close contact with the ring member with a relatively large force, the internal coil spring includes two internal hook portions at different angular positions in the circumferential direction, and each of the two internal hook portions is lockable on a locking means provided at the fixation member,
when a rotation torque is applied to the one-side member, one of the two external hook portions is pushed by the one-side locking portion in a direction that reduces a diameter of the external coil spring, and one of the two internal hook portions is pushed by the locking means in a direction that reduces a diameter of the internal coil spring, so that the one-side member rotates integrally with the external coil spring and the ring member overcoming a relatively large braking torque applied by the internal coil spring and transmits rotation to the other-side member, and
when a rotation torque is applied to the other-side member, one of the two external hook portions is pushed by the other-side locking portion in a direction that increases the diameter of the external coil spring, and one of the two internal hook portions is pushed by the locking means in a direction that reduces the diameter of the internal coil spring, so that, with the ring member held by the internal coil spring, the other-side member rotates together with the external coil spring relative to the ring member and overcoming a relatively small braking torque applied by the external coil spring and transmits rotation to the one-side member.

### Advantageous Effects of Invention

In the bidirectional torque limiter of the present invention, the internal coil spring and the external coil spring are mounted on the inner peripheral surface and the outer peripheral surface, respectively, of a common ring member. In contrast, in the prior bidirectional torque limiter, the internal coil spring is mounted on the outer peripheral surface of the inner race, and the external coil spring is mounted on the outer peripheral surface of the outer race. That is, the internal coil spring and the external coil spring are mounted on the outer peripheral surfaces of two different ring members. The ring member in the bidirectional torque limiter of the present invention is a combination of the inner race and the outer race in the prior bidirectional torque limiter. Thus, the bidirectional torque limiter of the present invention can reduce the number of components by one compared to the prior bidirectional torque limiter. Furthermore, in the bidirectional torque limiter of the present invention, the alignment between the external and internal coil springs and the ring member is not needed, simplifying the assembly process. The prior bidirectional torque limiter requires the internal coil spring and the outer race to be separately aligned.

It should be noted in advance that, as a bidirectional torque limiter in which an internal coil spring and an external coil spring are mounted on the inner peripheral surface and the outer peripheral surface, respectively, of a common ring member, there is a bidirectional torque limiter that is disclosed in JP 2002-155973 A, which was filed by the applicant of the present application prior to the present application and has already been published (hereinafter this will be referred to as a "reference bidirectional torque limiter"). However, this reference bidirectional torque limiter is configured such that the magnitude of rotation torque at which rotation starts differs between forward rotation and reverse rotation, and is completely different from the bidirectional torque limiter of the present invention and the prior bidirectional torque limiter described in PTL 1 described above.

### Brief Description of Drawings

[Fig. 1] Fig. 1 is a diagram showing the structure of a bidirectional torque limiter configured according to the present invention.
[Fig. 2] Fig. 2 is an exploded view of the bidirectional torque limiter shown in Fig. 1, with the components individually arranged.
[Fig. 3] Fig. 3 is a diagram showing the internal structure of the bidirectional torque limiter shown in Fig. 1 with a shield removed.
[Fig. 4] Fig. 4 is a diagram showing a housing of the bidirectional torque limiter shown in Fig. 1 alone.
[Fig. 5] Fig. 5 is a diagram showing a one-side member of the bidirectional torque limiter shown in Fig. 1 alone.
[Fig. 6] Fig. 6 is a diagram showing an other-side member of the bidirectional torque limiter shown in Fig. 1 alone.
[Fig. 7] Fig. 7 is a diagram showing a state in which a rotation torque is applied to the one-side member in the bidirectional torque limiter shown in Fig. 1.
[Fig. 8] Fig. 8 is a diagram showing a state in which a rotation torque is applied to the other-side member in the bidirectional torque limiter shown in Fig. 1.
[Fig. 9] Fig. 9 is a diagram showing a modification of a bidirectional torque limiter configured according to the present invention.

### Description of Embodiments

Further details are given below with reference to the accompanying drawings showing a preferred embodiment of a bidirectional torque limiter configured according to the present invention.

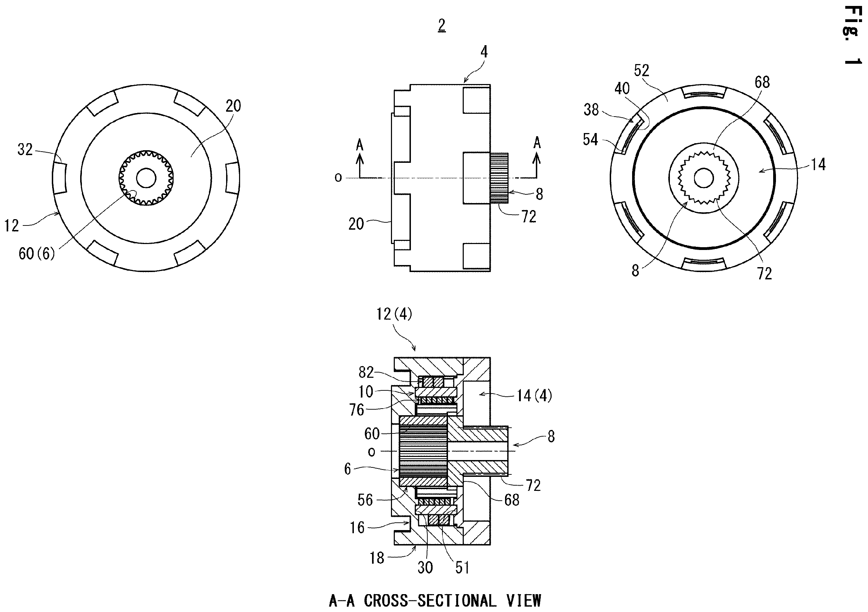

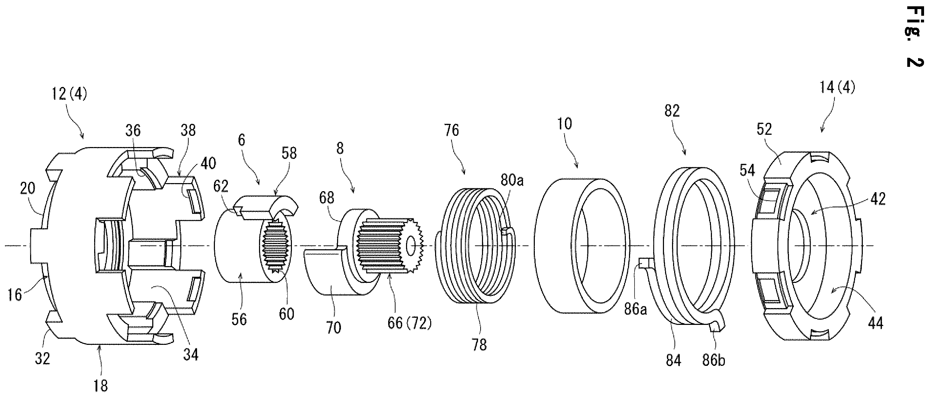

With reference to Figs. 1 to 3, a bidirectional torque limiter, indicated as a whole by reference numeral 2, includes a fixation housing 4 and a one-side member 6, an other-side member 8, and a ring member 10, which have a common central axis o within the housing 4.

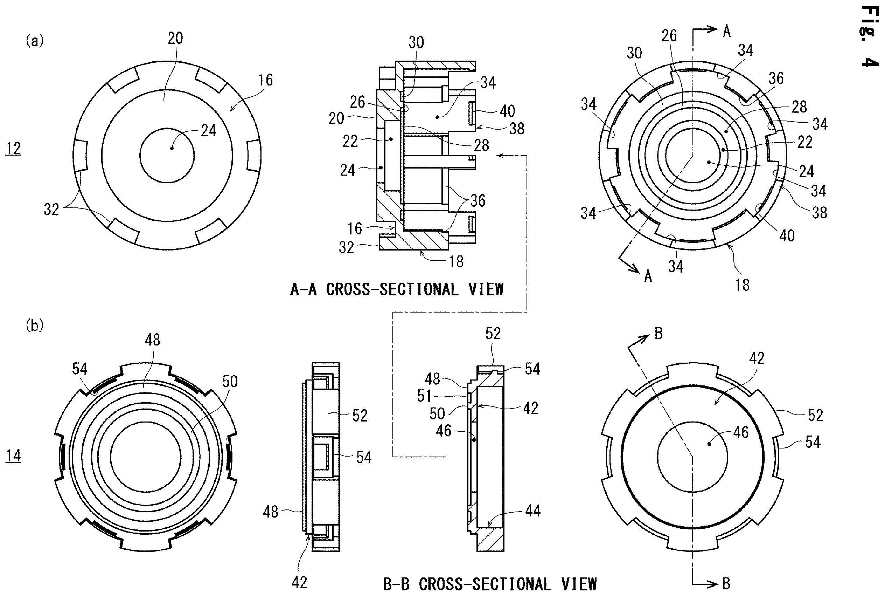

With reference to Fig. 4 in addition to Figs. 1 to 3, the housing 4 includes a housing body 12 shown in Fig. 4(a) and a shield 14 shown in Fig. 4(b). In the illustrated embodiment, the housing body 12 and the shield 14 are each integrally formed from a suitable synthetic resin. The housing body 12 includes a circular end plate 16, which is placed perpendicular to the axial direction, and a cylindrical outer peripheral wall 18, which extends from the outer peripheral edge of the end plate 16 to one axial side. A bulging portion 20 having a circular cross section is formed at the central section of the end plate 16 and bulges to the other axial side. A circular recess 22 is provided in the center of the surface on one axial side of the bulging portion 20, and a circular hole 24 is formed to axially extend through the center of the circular bottom surface of the recess 22. The surface on the one axial side of the end plate 16 has an annular remaining ridge 26 surrounding the peripheral edge of the recess 22. A circular depression 28 is provided on the inner side of the remaining ridge 26, and an annular groove 30 is provided on the outer side. Six arc-shaped projections 32, which project in the axial direction, are disposed at the outer peripheral edge portion of the surface on the other axial side of the end plate 16 at equal angular intervals in the circumferential direction. The housing 4 is fixed to a wall or the like (not shown) through the projections 32. The inner peripheral surface of the outer peripheral wall 18 includes multiple (six in the illustrated embodiment) arc-shaped recessed portions 34, which are formed by locally increasing the inner diameter, at intervals in the circumferential direction. The recessed portions 34 extend in the axial direction. The circumferential lengths of the multiple recessed portions 34 are not necessarily the same, but are varied as appropriate. A step portion 36, which extends in the circumferential direction, is formed at an axially extending end portion of the inner peripheral surface of the outer peripheral wall 18 in a circumferential angular region in which the recessed portion 34 is not formed. At the axially extending end surface of the outer peripheral wall 18, multiple (six in the illustrated embodiment) arc-shaped extension portions 38, which further extend continuously in the axial direction toward the one axial side, are formed at equal angular intervals in the circumferential direction. In the illustrated embodiment, the extension portions 38 substantially correspond to the circumferential angular regions in which the recessed portions 34 are formed. A locking ridge 40, which extends in the circumferential direction, is formed at the axially extending end portion of the inner peripheral surface of each extension portion 38.

The shield 14 includes a disk-shaped support wall 42, which is placed perpendicular to the axial direction, and a cylindrical mounting wall 44, which extends from the outer peripheral edge of the support wall 42 to one axial side. A circular hole 46 is formed to extend through the center of the support wall 42 in the axial direction. An annular outer ridge 48 and an annular inner ridge 50, which surround the peripheral edge of the hole 46, are formed on the outer peripheral edge portion of the surface on the other axial side of the support wall 42. An annular groove 51 is provided between the outer ridge 48 and the inner ridge 50. The outer diameter of the mounting wall 44 is greater than the outer diameter of the support wall 42. Arc-shaped protrusion portions 52 are formed on the outer peripheral surface of the mounting wall 44 by locally increasing the outer diameter. Corresponding to the number of extension portions 38 formed in the housing body 12, multiple protrusion portions 52, six in the illustrated embodiment accordingly, are formed, and these protrusion portions 52 are arranged at equal angular intervals in the circumferential direction. The circumferential interval between two protrusion portions 52 that are adjacent in the circumferential direction corresponds to the circumferential length of the extension portion 38. A locked ridge 54, which extends in the circumferential direction, is formed on the outer peripheral surface of the mounting wall 44 between two protrusion portions 52 that are adjacent in the circumferential direction. When mounting the shield 14 on the housing body 12, each extension portion 38 of the housing body 12 is aligned between two protrusion portions 52 adjacent in the circumferential direction, and then the shield 14 is forced in the axial direction toward the end plate 16 of the housing body 12, causing the locked ridge 54 to elastically pass over the locking ridge 40 of the extension portion 38. In a state in which the shield 14 is mounted on the housing body 12, the outer peripheral edge portion of the support wall 42 of the shield 14 is in contact with the step portions 36 of the housing body 12, and the protrusion portions 52 of the shield 14 are in contact with the axial end surface (excluding the extension portions 38) of the outer peripheral wall 18 of the housing body 12.

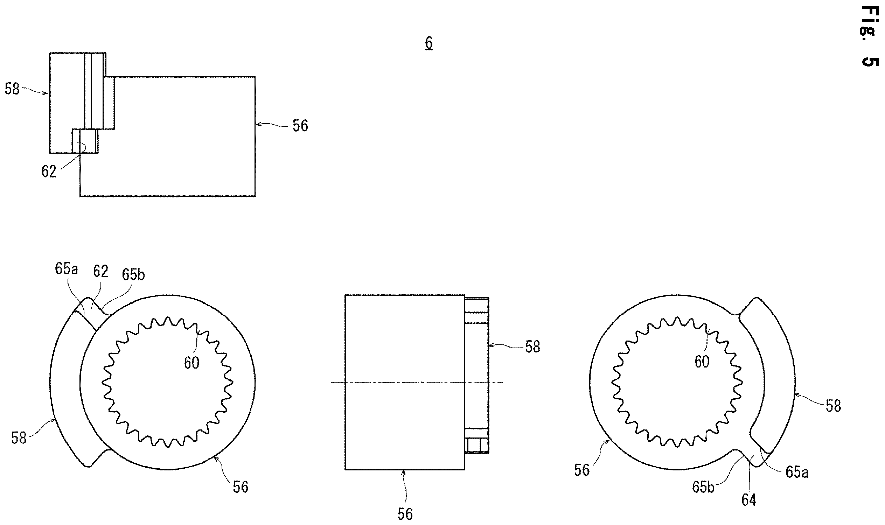

The description continues with reference to Fig. 5 in addition to Figs. 1 to 3. In the illustrated embodiment, the one-side member 6 is made of metal and is integrally formed by powder metallurgy. The one-side member 6 has a cylindrical one-side connection portion 56, which is connected to one of a drive-side external device and a driven-side external device (these external devices are not shown), and a one-side locking portion 58, which is provided at the outer peripheral surface of this one-side connection portion 56. The one-side connection portion 56 is axially hollowed through, and inner connection teeth 60, such as serrations, are formed at its inner peripheral surface. As shown in the A-A cross-sectional view of Fig. 1, one axial end portion of the one-side connection portion 56 is fitted into the recess 22 formed in the end plate 16 of the housing body 12 and is rotatably supported. The one-side locking portion 58 extends from a middle portion in the axial direction of the outer peripheral surface of the one-side connection portion 56 beyond the other axial end of the one-side connection portion 56 to the other axial side. The cross section of the one-side locking portion 58 has the shape of an arc extending around the central axis o. Cutouts 62 and 64 are formed at a circumferential end portion of both axial end portions of the one-side locking portion 58, and each circumferential end surface of the one-side locking portion 58 is partitioned into a cutout end surface 65a, in which the cutout 62 or 64 is formed, and a non-cutout end surface 65b, in which the cutout 62 or 64 is not formed. In the illustrated embodiment, the cutout 62 is formed only at the downstream end portion in the clockwise direction in the left drawing of Fig. 5, and the cutout 64 is formed only at the downstream end portion in the clockwise direction in the right drawing of Fig. 5. Accordingly, when viewed from one axial direction, the cutouts 62 and 64 are located on opposite sides in the circumferential direction.

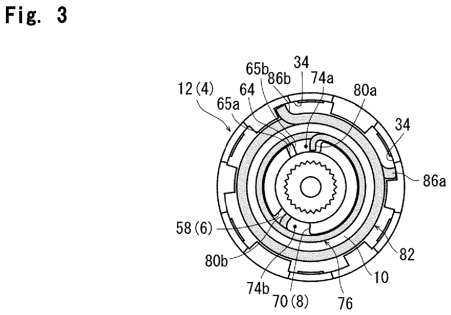

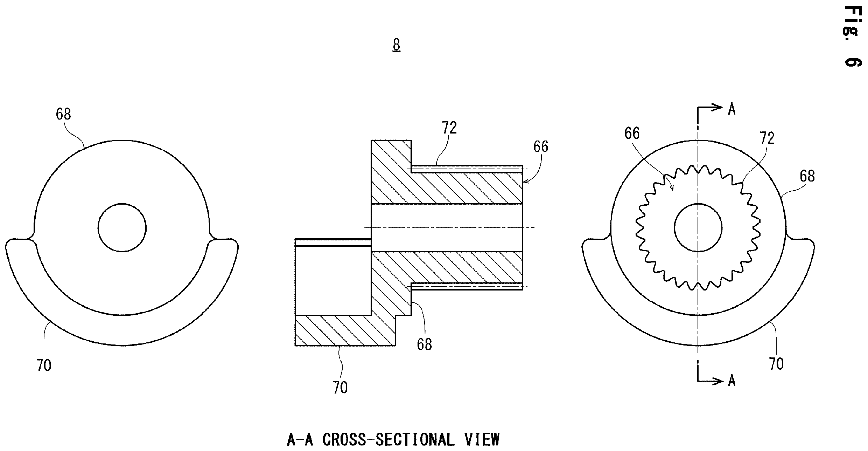

The description continues with reference to Fig. 6 in addition to Figs. 1 to 3. In the illustrated embodiment, the other-side member 8 is made of metal and is integrally formed by powder metallurgy. The other-side member 8 includes a cylindrical other-side connection portion 66, which is connected to the other of the drive-side external device and the driven-side external device (these external devices are not shown), a disk-shaped middle portion 68, which is connected to one axial end of the other-side connection portion 66, and an other-side locking portion 70, which is provided at the outer peripheral surface of the middle portion 68. The other-side connection portion 66 and the middle portion 68 are integrally hollowed through in the axial direction. Outer connection teeth 72, such as serrations, are formed at the outer peripheral surface of the other-side connection portion 66. As shown in the A-A cross-sectional view of Fig. 1, the middle portion 68 is placed in the hole 46 formed in the support wall 42 of the shield 14 to axially support the one-side connection portion 56 of the one-side member 6. The other-side locking portion 70 extends from a middle portion in the axial direction of the outer peripheral surface of the middle portion 68 beyond one axial end of the middle portion 68 to one axial side. The cross section of the other-side locking portion 70 has the shape of an arc extending around the central axis o. Although not necessarily clearly shown, the surface of the other axial end of the other-side locking portion 70 faces the support wall 42 of the shield 14, thereby preventing the one-side member 6 and the other-side member 8 from moving axially and falling off the housing 4. As can be understood by referring to Fig. 3, the one-side locking portion 58 and the other-side locking portion 70 are combined and arranged such that two gaps 74a and 74b are present in the circumferential direction.

The description continues with reference to Figs. 1 to 3. In the illustrated embodiment, the ring member 10 is made of metal and is a rigid cylindrical member having a required axial width and radial thickness (plate thickness). As shown in the A-A cross-sectional view of Fig. 1, one axial end portion of the ring member 10 is fitted (loosely fitted) in the annular groove 30 formed in the end plate 16 of the housing body 12, and the other axial end portion is fitted (loosely fitted) in the annular groove 51 formed in the support wall 42 of the shield 14, so that the ring member 10 is supported from both axial sides by the housing 4.

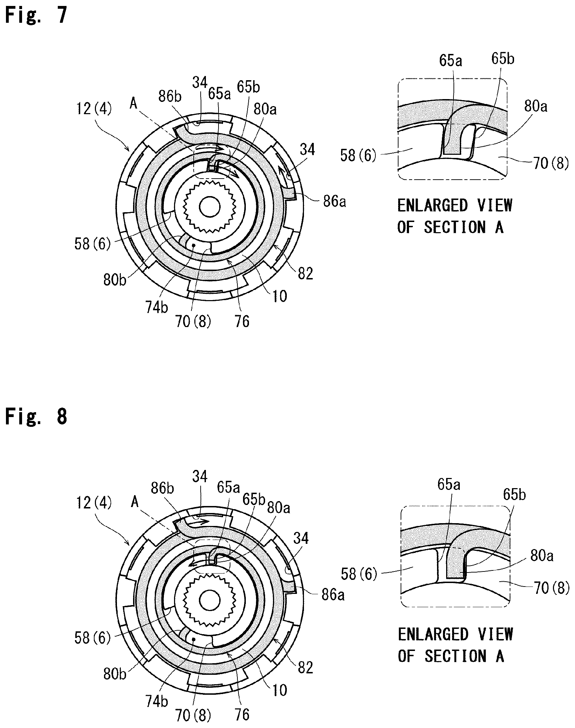

An internal coil spring 76 is mounted on the inner peripheral surface of the ring member 10. In Fig. 3, the internal coil spring 76 is shaded for easy understanding (the same applies to Figs. 7 and 8 to be described below). In the illustrated embodiment, the internal coil spring 76 is made of a metal wire having a rectangular cross section. The internal coil spring 76 includes an internal winding portion 78, in which the wire is wound in a spiral shape, and two internal hook portions 80a and 80b, in which the wire is bent radially inward at both axial ends of the internal winding portion 78. The outer diameter of the internal coil spring 76, that is, the outer diameter of the internal winding portion 78, in a free state is greater than the inner diameter of the ring member 10, and the internal coil spring 76 is held in close contact with the ring member 10 with a relatively small force. The torque that is generated by the internal coil spring 76 being in close contact with the ring member 10 in a state in which the internal coil spring 76 is mounted on the ring member 10 and no force is acting on either of the two internal hook portions 80a and 80b may be referred to as an internal holding torque, and this internal holding torque is relatively small. The two internal hook portions 80a and 80b are located at different angular positions in the circumferential direction, and each of the two internal hook portions 80a and 80b is inserted into a corresponding one of the two gaps 74a and 74b described above, as shown in Fig. 3. The internal coil spring 76 is coated with a lubricant.

Further, an external coil spring 82 is mounted on the outer peripheral surface of the ring member 10. In Fig. 3, the external coil spring 82 is also shaded for easy understanding (the same applies to Figs. 7 and 8 to be described below). In the illustrated embodiment, the external coil spring 82 is aligned with the internal coil spring 76 in the axial direction. The external coil spring 82 is also made of a metal wire having a rectangular cross section. The external coil spring 82 includes an external winding portion 84, in which the wire is wound in a spiral shape, and two external hook portions 86a and 86b, in which the wire is bent radially outward at both axial ends of the external winding portion 84. As viewed from one axial side, the internal coil spring 76 and the external coil spring 82 have the same wire winding direction. The inner diameter of the external coil spring 82, that is, the inner diameter of the external winding portion 84, in a free state is less than the outer diameter of the ring member 10, and the external coil spring 82 is held in close contact with the ring member 10 with a relatively large force. The torque that is generated by the external coil spring 82 being in close contact with the ring member 10 in a state in which the external coil spring 82 is mounted on the ring member 10 and no force is acting on either of the two external hook portions 86a and 86b may be referred to as an external holding torque, and this external holding torque is relatively large. The two external hook portions 86a and 86b are located at different angular positions in the circumferential direction, and the two external hook portions 86a and 86b are separately inserted in two of the multiple recessed portions 34 formed in the inner peripheral surface of the outer peripheral wall 18 of the housing body 12, as shown in Fig. 3. The external coil spring 82 is also coated with a lubricant.

The operation of the bidirectional torque limiter 2 is now described.

Referring to Fig. 7 in addition to Figs. 1 to 3, a case is first described where a rotation torque is applied to the one-side member 6 from one of the external devices (not shown) described above in the clockwise direction (as viewed from the right side of the A-A cross-sectional view of Fig. 1, the same applies hereinafter). In this case, the one-side locking portion 58 rotates clockwise and its circumferential end surface (more specifically, the circumferential end surface on the downstream side in the clockwise direction) pushes the internal hook portion 80a of the internal coil spring 76 in the clockwise direction. In the illustrated embodiment, the cutout end surface 65a pushes the internal hook portion 80a. The external coil spring 82 is also mounted on the outer peripheral surface of the ring member 10, on which the internal coil spring 76 is mounted. Thus, when the internal hook portion 80a is pushed clockwise and the ring member 10 begins rotating clockwise together with the internal coil spring 76, the external hook portion 86a is pushed counterclockwise by the housing 4 in the recessed portion 34. When the internal hook portion 80a is pushed clockwise, the diameter of the internal coil spring 76, that is, the internal winding portion 78, increases, augmenting the close contact between the outer peripheral surface of the internal winding portion 78 and the inner peripheral surface of the ring member 10. This causes the ring member 10 to begin rotating clockwise integrally with the internal coil spring 76. In contrast, when the external hook portion 86a is pushed counterclockwise, the diameter of the external coil spring 82, that is, the external winding portion 84, increases, weakening the close contact between the inner peripheral surface of the external winding portion 84 and the outer peripheral surface of the ring member 10. As such, when the rotation torque applied to the one-side member 6 is greater than the relatively large external holding torque, the ring member 10 slides relative to the external coil spring 82. In other words, with the external coil spring 82 held in the housing 4, the ring member 10 starts to rotate relative to the external coil spring 82, and the one-side member 6, the internal coil spring 76, and the ring member 10 start to rotate integrally in the clockwise direction. Then, after the non-cutout end surface 65b of the one-side locking portion 58 comes into contact with the circumferential end surface of the other-side locking portion 70 (more specifically, the circumferential end surface on the upstream side in the clockwise direction), as shown in Fig. 7, the one-side member 6, the internal coil spring 76, and the ring member 10 rotate integrally together with the other-side member 8 in the clockwise direction. That is, the clockwise rotation applied to the one-side member 6 is transmitted to the other-side member 8. At this time, the internal hook portion 80a is separated from the circumferential end surface of the other-side locking portion 70. When the rotation torque applied to the one-side member 6 is less than the relatively large external holding torque, the one-side member 6 does not rotate and is held by the external holding torque.

The case where the one-side member 6 rotates counterclockwise is the same as the case where the one-side member 6 rotates clockwise, except that the one-side locking portion 58 pushes the internal hook portion 80b of the internal coil spring 76 and the housing 4 pushes the external hook portion 86b of the external coil spring 82. Thus, detailed descriptions are omitted. The internal hook portion 80b and the external hook portion 86b are pushed in directions that increase the diameters of the respective coil springs. The magnitude of rotation torque at which the ring member 10 starts to rotate relative to the external coil spring 82 is the same as that when the one-side member 6 rotates clockwise.

Referring to Fig. 8 in addition to Figs. 1 to 3, a case is now described where a rotation torque is applied in the counterclockwise direction to the other-side member 8 from the other external device (not shown). In this case, the other-side locking portion 70 rotates counterclockwise and its circumferential end surface (more specifically, the circumferential end surface on the downstream side in the counterclockwise direction) pushes the internal hook portion 80a of the internal coil spring 76 in the counterclockwise direction. The external coil spring 82 is also mounted on the outer peripheral surface of the ring member 10, on which the internal coil spring 76 is mounted. Thus, when the internal hook portion 80a is pushed counterclockwise and the ring member 10 begins rotating counterclockwise together with the internal coil spring 76, the external hook portion 86b is pushed clockwise by the housing 4 in the recessed portion 34. When the internal hook portion 80a is pushed counterclockwise, the diameter of the internal coil spring 76, that is, the internal winding portion 78, decreases, weakening the close contact between the outer peripheral surface of the internal winding portion 78 and the inner peripheral surface of the ring member 10. Also, when the external hook portion 86b is pushed clockwise, the diameter of the external coil spring 82, that is, the external winding portion 84, increases, weakening the close contact between the inner peripheral surface of the external winding portion 84 and the outer peripheral surface of the ring member 10. As such, when the rotation torque applied to the other-side member 6 is greater than the relatively small internal holding torque, the internal coil spring 76 slides relative to the ring member 10. In other words, with the ring member 10 held by the external coil spring 82, the internal coil spring 76 starts to rotate relative to the ring member, and the other-side member 8 and the internal coil spring 76 start to rotate integrally in the counterclockwise direction. Subsequently, as shown in Fig. 8, the circumferential end surface of the other-side locking portion 70 (more specifically, the circumferential end surface on the downstream side in the counterclockwise direction) comes into contact with the non-cutout end surface 65b of the one-side member 6 (the non-cutout end surface 65b is located on the upstream side in the counterclockwise direction) together with the internal hook portion 80a and pushes them in the counterclockwise direction. Thus, the other-side member 8 and the internal coil spring 76 rotate integrally together with the one-side member 6 in the counterclockwise direction. In other words, the counterclockwise rotation applied to the other-side member 8 is transmitted to the one-side member 6. At this time, the internal hook portion 80a is separated from the cutout end surface 65a of the one-side locking portion 58. When the rotation torque applied to the other-side member 8 is smaller than the relatively small internal holding torque, the other-side member 8 does not rotate and is held by the internal holding torque.

The case where the other-side member 8 rotates clockwise is the same as the case where the other-side member 8 rotates counterclockwise, except that the other-side locking portion 70 pushes the internal hook portion 80b of the internal coil spring 76 and the housing 4 pushes the external hook portion 86a of the external coil spring 82. Thus, detailed descriptions are omitted. The internal hook portion 80b is pushed in the direction that reduces the diameter of the internal coil spring 76, and the external hook portion 86a is pushed in the direction that increases the diameter of the external coil spring 82 also in this case. The magnitude of rotation torque at which the internal coil spring 76 starts to rotate relative to the ring member 10 is the same as that when the other-side member 8 rotates counterclockwise.

In other words, in the bidirectional torque limiter 2, the magnitude of rotation torque at which sliding starts, that is, at which rotation starts, differs between the case where a rotation torque is transmitted from the one-side member 6 to the other-side member 8 and the case where a rotation torque is transmitted from the other-side member 8 to the one-side member 6, and the magnitude is set to be larger for the former than for the latter. For this reason, when a hatchback as a driven-side external device is connected to the one-side connection portion 56 of the one-side member 6 and an electric motor as a drive-side external device is connected to the other-side connection portion 66 of the other-side member 8, for example, the electric motor can open and close the hatchback with a relatively light load, while the angular position of the hatchback that is between a fully open angular position and an intermediate angular position is held without oscillation under a relatively light load caused by external disturbances such as wind. As such, the bidirectional torque limiter according to the present invention can also be used as an angular position holding device.

Among bidirectional torque limiters having such properties, in the bidirectional torque limiter according to the present invention, the internal coil spring 76 and the external coil spring 82 are mounted on the inner peripheral surface and the outer peripheral surface, respectively, of the common ring member 10, and therefore the number of components can be reduced by one compared with a configuration in which the internal coil spring and the external coil spring are mounted separately on the outer peripheral surfaces of two different ring members (inner race and outer race) as in the prior bidirectional torque limiter. Furthermore, in the bidirectional torque limiter of the present invention, the alignment between the external and internal coil springs and the ring member is not needed, simplifying the assembly process. The prior bidirectional torque limiter requires the internal coil spring and the outer race to be separately aligned.

Furthermore, in the illustrated embodiment, the one-side member 6, the other-side member 8, the ring member 10, the internal coil spring 76, and the external coil spring 82 are made of metal, but the housing 4 is made of synthetic resin. As such, noise may be generated when the one-side locking portion 58 or the other-side locking portion 70 comes into contact with the internal hook portion 80a or 80b of the internal coil spring 76 since this is a collision between metal materials, but almost no noise is generated when the external hook portion 86a or 86b of the external coil spring 82 comes into contact with the housing 4 since this is a collision between metal and synthetic resin. If the housing 4 is made of metal, the noise generated by the collision between the external hook portion 86a or 86b and the housing 4 would also be added, causing the above-mentioned noise generated during operation to be excessively loud. Although the one-side member and the other-side member could be made of synthetic resin, these members are preferably made of metal, and particularly by powder metallurgy, since these members are connected to external members and thus need to have relatively high strength.

Furthermore, in the illustrated embodiment, when the one-side member 6 rotates, the cutout end surface 65a pushes one of the two internal hook portions 80a and 80b, and the non-cutout end surface 65b pushes the circumferential end surface of the other-side locking portion 70, so that one of the two internal hook portions 80a and 80b pushed by the cutout end surface 65a is separated from the circumferential end surface of the other-side locking portion 70. In contrast, when the other-side member 8 rotates, the circumferential end surface of the other-side locking portion 70 pushes the non-cutout end surface 65b of the one-side member 6 together with one of the two internal hook portions 80a and 80b, and one of the two internal hook portions 80a and 80b pushed by the other-side locking portion 70 is separated from the cutout end surface 65a of the one-side locking portion 58. In other words, irrespective of whether a rotation torque is applied from the one-side member 6 or the other-side member 8, the internal hook portions 80a and 80b are not sandwiched by the circumferential end surfaces of the one-side locking portion 58 and the other-side locking portion 70, and the internal hook portions 80a and 80b are not located on the transmission path of the rotation torque from the one-side member 6 to the other-side member 8 or vice versa. As such, when the rotation torque is applied, the force is not concentrated on the internal hook portions 80a and 80b, preventing damage to the internal hook portions 80a and 80b.

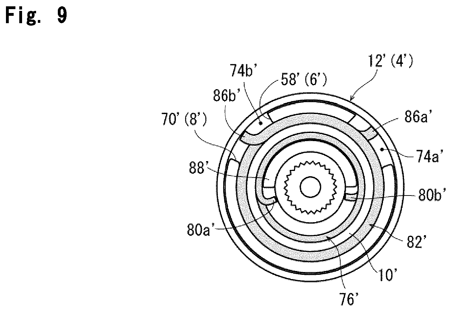

The bidirectional torque limiter configured according to the present invention has been described in detail above with reference to the attached drawings. However, the present invention is not limited to the above-described embodiment, and appropriate modifications and changes are possible without departing from the scope of the present invention. For example, in the embodiment described above, the two internal hook portions 80a and 80b of the internal coil spring 76 are inserted in the two gaps 74a and 74b, respectively, created when the one-side locking portion 58 and the other-side locking portion 70 are combined, but instead, the two external hook portions of the external coil spring may be inserted in the two gaps 74a and 74b respectively. This modification is described with reference to Fig. 9. Fig. 9 corresponds to Fig. 3. In Fig. 9, configurations identical to those in Fig. 3 are indicated with the same reference numerals followed by a prime mark, and a detailed description thereof will be omitted. In this modification, the external coil spring 82' is held in close contact with the ring member 10' with less force than that for the internal coil spring 76'. A locking means 88', which has an arc-shaped cross section and extends linearly in the axial direction, is formed at the center of the housing 4', which is a fixation member (the locking means 88' is thus fixed), and the internal coil spring 76' is placed along the outer peripheral surface of the locking means 88'. When a rotation torque is applied to the one-side member 6' or the other-side member 8' so that the internal coil spring 76' begins rotating together with the ring member 10', one of the two internal hook portions 80a' and 80b' is pushed in the direction that reduces the diameter of the internal coil spring 76' by the locking means 88', more specifically its circumferential end surface. Thus, when a rotation torque is applied to the one-side member 6', one of the two external hook portions 86a' and 86b' is pushed by the one-side locking portion 58' in the direction that reduces the diameter of the external coil spring 82', and one of the two internal hook portions 80a' and 80b' is pushed by the locking means 88' in the direction that reduces the diameter of the internal coil spring 76', so that the one-side member 6' rotates integrally with the external coil spring 82' and the ring member 10' overcoming the relatively large braking torque applied by the internal coil spring 76' and transmits the rotation to the other-side member 8'. In contrast, when a rotation torque is applied to the other-side member 8', one of the two external hook portions 86a' and 86b' is pushed by the other-side locking portion 70' in the direction that increases the diameter of the external coil spring 82', and one of the two internal hook portions 80a' and 80b' is pushed by the locking means 88' in the direction that reduces the diameter of the internal coil spring 76', so that, with the ring member 10' held by the internal coil spring 76', the other-side member 8' rotates together with the external coil spring 82' relative to the ring member 10' overcoming the relatively small braking torque applied by the external coil spring 82' and transmits the rotation to the one-side member 6'. In this modification, the locking means 88' does not necessarily have to be disposed in the housing 4' as long as it is fixed, and therefore the housing 4' may be omitted. When the housing 4' is omitted, the locking means 88' itself serves as a fixation member, or is provided as a part of a separate fixation member (not shown).

Additionally, in the illustrated embodiment, the cross sections of the one-side locking portion and the other-side locking portion both have the shape of an arc extending around the central axis and are each formed by a single member, but each of the one-side locking portion and the other-side locking portion may also be formed by separate two columnar members arranged spaced apart from each other in the circumferential direction. Depending on the intended use, all of the components may be made of synthetic resin or metal. Furthermore, the cross sections of the wires forming the internal coil spring and the external coil spring may be circular rather than rectangular.

### Description of Reference Numerals

2 Bidirectional torque limiter
4 Housing
6 One-side member
8 Other-side member
10 Ring member
34 Recessed portion (of housing)
58 One-side locking portion
70 Other-side locking portion
74a and 74b Gap
76 Internal coil spring
80a and 80b Internal hook portion
82 External coil spring
86a and 86b External hook portion

## Claims

1. A bidirectional torque limiter comprising a fixation housing and a one-side member, an other-side member, and a cylindrical ring member that have a common central axis in the housing, wherein
a one-side locking portion extending in an axial direction is formed at the one-side member, an other-side locking portion extending in the axial direction is formed at the other-side member, and the one-side locking portion and the other-side locking portion are combined and arranged such that two gaps are present in a circumferential direction,
an internal coil spring is mounted on an inner peripheral surface of the ring member, an outer diameter of the internal coil spring in a free state is greater than an inner diameter of the ring member, the internal coil spring held in close contact with the ring member with a relatively small force, the internal coil spring includes two internal hook portions at different angular positions in a circumferential direction, and each of the two internal hook portions is inserted in a corresponding one of the two gaps,
an external coil spring is mounted on an outer peripheral surface of the ring member, an inner diameter of the external coil spring in a free state is less than an outer diameter of the ring member, the external coil spring is held in close contact with the ring member with a relatively large force, the external coil spring includes two external hook portions at different angular positions in the circumferential direction, and each of the two external hook portions is inserted in a recessed portion formed in an inner peripheral surface of the housing,
when a rotation torque is applied to the one-side member, one of the two internal hook portions is pushed by the one-side locking portion in a direction that increases a diameter of the internal coil spring, and one of the two external hook portions is pushed by the housing in the recessed portion in a direction that increases a diameter of the external coil spring, so that the one-side member rotates integrally with the internal coil spring and the ring member overcoming a relatively large braking torque applied by the external coil spring and transmits rotation to the other-side member, and
when a rotation torque is applied to the other-side member, one of the two internal hook portions is pushed by the other-side locking portion in a direction that reduces the diameter of the internal coil spring, and one of the two external hook portions is pushed by the housing in the recessed portion in a direction that increases the diameter of the external coil spring, so that, with the ring member held by the external coil spring, the other-side member rotates together with the internal coil spring relative to the ring member and overcoming a relatively small braking torque applied by the internal coil spring and transmits rotation to the one-side member.

2. The bidirectional torque limiter of claim 1, wherein cross sections of the one-side locking portion and the other-side locking portion both have a shape of an arc extending around the central axis.

3. The bidirectional torque limiter of claim 2, wherein a cutout is formed at a circumferential end portion of both axial end portions of the one-side locking portion, and a circumferential end surface of the one-side locking portion is partitioned into a cutout end surface in which the cutout is formed and a non-cutout end surface in which the cutout is not formed, and
when the one-side member rotates, the cutout end surface pushes one of the two internal hook portions, and the non-cutout end surface pushes a circumferential end surface of the other-side locking portion, so that one of the two internal hook portions pushed by the cutout end surface is separated from the circumferential end surface of the other-side locking portion, whereas when the other-side member rotates, a circumferential end surface of the other-side locking portion pushes the non-cutout end surface of the one-side member together with one of the two internal hook portions, so that one of the two internal hook portions pushed by the other-side locking portion is separated from the cutout end surface of the one-side locking portion.

4. The bidirectional torque limiter of claim 1, wherein annular grooves in which both axial end portions of the ring member are loosely fitted are provided in the housing.

5. The bidirectional torque limiter of claim 1, wherein the one-side member, the other-side member, the ring member, the internal coil spring, and the external coil spring are made of metal, and the housing is made of synthetic resin.

6. A bidirectional torque limiter comprising a fixation member and a one-side member, an other-side member, and a cylindrical ring member that have a common central axis, wherein
a one-side locking portion extending in an axial direction is formed at the one-side member, an other-side locking portion extending in the axial direction is formed at the other-side member, and the one-side locking portion and the other-side locking portion are combined and arranged such that two gaps are present in a circumferential direction,
an external coil spring is mounted on an outer peripheral surface of the ring member, an inner diameter of the external coil spring in a free state is less than an outer diameter of the ring member, the external coil spring is held in close contact with the ring member with a relatively small force, the external coil spring includes two external hook portions at different angular positions in a circumferential direction, and each of the two external hook portions is inserted in a corresponding one of the two gaps,
an internal coil spring is mounted on an inner peripheral surface of the ring member, an outer diameter of the internal coil spring in a free state is greater than an inner diameter of the ring member, the internal coil spring is held in close contact with the ring member with a relatively large force, the internal coil spring includes two internal hook portions at different angular positions in the circumferential direction, and each of the two internal hook portions is lockable on a locking means provided at the fixation member,
when a rotation torque is applied to the one-side member, one of the two external hook portions is pushed by the one-side locking portion in a direction that reduces a diameter of the external coil spring, and one of the two internal hook portions is pushed by the locking means in a direction that reduces a diameter of the internal coil spring, so that the one-side member rotates integrally with the external coil spring and the ring member overcoming a relatively large braking torque applied by the internal coil spring and transmits rotation to the other-side member, and
when a rotation torque is applied to the other-side member, one of the two external hook portions is pushed by the other-side locking portion in a direction that increases the diameter of the external coil spring, and one of the two internal hook portions is pushed by the locking means in a direction that reduces the diameter of the internal coil spring, so that, with the ring member held by the internal coil spring, the other-side member rotates together with the external coil spring relative to the ring member and overcoming a relatively small braking torque applied by the external coil spring and transmits rotation to the one-side member.
